# EUROPÄISCHE PATENTSCHRIFT

(11) **EP 2 637 938 B1**
(45) Veröffentlichungstag und Bekanntmachung des Hinweises auf die Patenterteilung: **13.07.2016**
(21) Anmeldenummer: 11774027.4
(22) Anmeldetag: 20.10.2011
(51) Int. Cl.: B65B 59/00, B65G 15/24, B65G 21/10, B65G 37/00

(54) **MASCHINE ZUR VERARBEITUNG UND/ODER VERPACKUNG VON GEGENSTÄNDEN UND VERFAHREN ZUM MODIFIZIEREN EINER TRANSPORTSTRECKE DIESER MASCHINE**
MACHINE FOR PROCESSING AND/OR PACKAGING OBJECTS AND METHOD FOR MODIFYING A CONVEYING SECTION OF THIS MACHINE
MACHINE POUR TRAITER ET/OU EMBALLER DES OBJETS ET PROCÉDÉ POUR MODIFIER UN TRAJET DE TRANSPORT DE CETTE MACHINE

(30) Priorität: 08.11.2010 DE 102010050524
(43) Veröffentlichungstag der Anmeldung: 18.09.2013
(60) Teilanmeldung: 16172108.9
(73) Patentinhaber: Krones AG, 93073 Neutraubling (DE)
(72) Erfinder: WERNER, Jürgen, 93073 Neutraubling (DE); SPINDLER, Herbert, 93073 Neutraubling (DE); WIMMER, Thomas, 93073 Neutraubling (DE)
(74) Vertreter: Benninger, Johannes
(86) Internationale Anmeldenummer: PCT/EP2011/068339
(87) Internationale Veröffentlichungsnummer: WO 2012/062549

(56) Entgegenhaltungen:
- US-A1- 2005 056 677
- US-A1- 2006 096 844
- US-A1- 2010 270 124
- US-B1- 6 484 475

## Beschreibung

Die vorliegende Erfindung betrifft eine Maschine zur Verarbeitung und/oder Verpackung von Gegenständen mit einer im Wesentlichen horizontalen Transportstrecke mit den Merkmalen des unabhängigen Anspruchs 1. Die Erfindung betrifft weiterhin ein Verfahren zum Modifizieren einer Transportstrecke einer solchen Maschine mit den Merkmalen des unabhängigen Verfahrensanspruchs 8.

Für die Verarbeitung, Zusammenstellung, Gruppierung und Verpackung von Artikeln wie bspw. Getränkebehältern gibt es die unterschiedlichsten Verpackungsarten. Derzeit bspw. als Getränkebehälter am häufigsten eingesetzte PET-Behälter weisen relativ geringe Wandstärken auf und sind auch im befüllten Zustand nicht völlig formstabil. Aus diesem Grund und im Hinblick auf die bessere logistische Handhabbarkeit werden die verschiedensten Verpackungen für gruppierte Einzelbehälter eingesetzt. So können die Behälter in gruppierter Anordnung bspw. auf einen Kartonbogen gestellt werden, dessen Ränder nach oben gefalzt werden. Auch können Kartonbögen eingesetzt werden, dessen Größe der Grundfläche der Gebindeanordnung entspricht, so dass keine Ränder nach oben zu falzen sind. Wahlweise können diese Gebindeanordnungen anschließend mit Folie umhüllt und diese mittels eines Erwärmungsprozesses geschrumpft werden, um einen stabilen Gebindeverbund zu erhalten, der leicht transportiert und gestapelt werden kann. Eine weitere Gebindevariante wird als "Shrink-only" bezeichnet, da hierbei die zusammengestellten Behälter ohne weitere Hilfsmittel mit Folie umhüllt und diese aufgeschrumpft wird. Die Formstabilität dieser Gebindevariante wird ausschließlich von der Schrumpffolie gewährleistet. Bekannte Verpackungsmaschinen und deren Fördereinrichtungen sind normalerweise jeweils auf eine bestimmte Art, Größe und/oder Kontur von Fördergütern optimiert. Zudem werden für verschiedene Gebinde- und Verpackungsarten jeweils verschiedene Fördereinrichtungen benötigt. Ein Produktwechsel kann unter Umständen dazu führen, dass bestimmte Fördereinrichtungen nicht mehr eingesetzt werden können, da sie bspw. nicht für den Transport von einzelnen Artikeln oder Behältern geeignet sind. Störungen im Transport der Artikel können auch dann auftreten, wenn die Verpackungsmaschinen auf eine jeweils andere Produktvariante eingestellt sind. Solche Förderprobleme können insbesondere bei einem Wechsel zwischen verpackten Gütern wie bspw. Gebindeeinheiten und losen Gütern wie einzelnen Getränkebehältern o. dgl. auftreten. Solche aufrecht stehend zu befördernde Artikel wie Getränkebehälter können auf Fördereinrichtungen, die für den Transport von Gebindeeinheiten vorbereitet sind, leicht kippen und/oder herabfallen, da die Transportmodule möglicherweise keine ausreichend ebenen Unterlagen bieten können, die einen stabilen Transport von Gegenständen mit sehr kleiner Grundfläche ermöglichen.

Ein Fördersystem zum Bewegen von Objekten mit einem zusätzlichen, verschiebbar gelagerten Förderabschnitt offenbart beispielsweise die US 2005/056677 A1. Der zusätzliche Förderabschnitt verfügt über eine Transportstrecke, die durch einzeln zueinander beanstandete Rollen ausgebildet ist. Zur Höhenverstellung des Förderabschnitts ist eine Hubeinrichtung vorgesehen, welche an dem einem Ende des Förderabschnitts angeordnet ist. Der Förderabschnitt kann dabei so positioniert werden, dass der Förderabschnitt den weiteren Förderern vorangestellt ist. Die weiteren Förderer können durch angetriebene Förderbänder ausgebildet sein.

Eine Maschine zum Verpacken von Gegenständen ist durch die US 6 484 475 B1 offenbart. Die Vorrichtung umfasst mehrere Module, die jeweils unterschiedliche Funktionen in der Verpackungslinie übernehmen. Die einzelnen Module sind allesamt auf gleicher Höhe angeordnet, so dass kein zusätzliches mechanisches Verbindungselement o.dgl. erforderlich ist. Durch die Austauschbarkeit der einzelnen Module können leicht neue bzw. andere Module hinzugefügt und/oder auch entfernt werden. Als Koordinierungselement bspw. zur Steuerung der Geschwindigkeiten der Transportstrecken der einzelnen Module wird ein Überwachungscomputer eingesetzt. Dieser steuert und koordiniert die gesamte Einrichtung, insbesondere aber die einzelnen Module. Jedes Modul umfasst ein Förderband und einen Servoantrieb. Die Servoantriebe können durch den genannten Überwachungscomputer entsprechend gesteuert werden.

Das Ziel der vorliegenden Erfindung wird darin gesehen, eine Verpackungsmaschine mit einer Transporteinrichtung oder Transportstrecke oder eine andere Verarbeitungsmaschine zur Verfügung zu stellen, die für unterschiedliche Fördergüter gleichermaßen geeignet und optimiert ist, ohne dass Einschränkungen hinsichtlich der Förderqualität für die jeweils zu befördernden Produkte damit verbunden sind.

Dieses Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen.

Zur Erreichung des genannten Ziels schlägt die Erfindung eine Maschine zur Verarbeitung und/oder Verpackung von Gegenständen wie bspw. Getränkebehältern mit einer im Wesentlichen horizontalen Transportstrecke zur Förderung von Artikeln, Gebinden und/oder Verpackungseinheiten vor. Die Transportstrecke umfasst eine erste Horizontalfördereinrichtung mit wenigstens einem Transportmittel für einen ersten Betriebsmodus, die zur Herstellung mindestens eines weiteren Betriebsmodus durch eine weitere Horizontalfördereinrichtung mit wenigstens einem zum ersten Transportmittel unterschiedlichen zweiten Transportmittel auswechselbar ist. Wenn im vorliegenden Zusammenhang von auswechselbaren Transportmitteln bzw. von auswechselbaren Horizontalfördereinrichtungen die Rede ist, so bezieht sich dies grundsätzlich auf die Ausstattung der räumlich weitgehend unveränderlichen Transportstrecke. Ein Abschnitt dieser Transportstrecke kann zur Beförderung von Gegenständen definierter Art und/oder Verpackungsart wahlweise durch die erste oder zweite Horizontalfördereinrichtung gebildet sein. Dies bedeutet nicht, dass das jeweils nicht verwendete Transportmittel tatsächlich aus der Maschine entnommen wird, sondern dass es aus dem Eingriffs- und/oder Wirkungsbereich der Transportstrecke gebracht wird. Das jeweils nicht verwendete Transportmittel kann eine Park- oder Ruhelage in unmittelbarer Nähe der Transportstrecke einnehmen, während sich das jeweils andere Transportmittel im Eingriff befindet und einen Teil der Transportstrecke bildet.

Die erste Horizontalfördereinrichtung mit dem Transportmittel für den ersten Betriebsmodus kann bspw. eine mehrteilige Förderkette mit aus der Förderebene schwenkbaren Faltfingern sein, wie sie typischerweise zur Herstellung sog. Kartontrays eingesetzt werden kann. Bei dieser Verpackungsvariante werden mehrere Artikel wie bspw. Getränkebehälter gruppiert und auf einen Kartonbogen gestellt, der mittels der Horizontalfördereinrichtung befördert wird. Die von unten aus der Förderebene auftauchenden Faltfinger dienen zum Hochklappen vorderer und/oder hinterer Randabschnitte des Kartonbogens, so dass ein sog. Tray gebildet wird, dessen Ränder später durch Verkleben oder auf andere Weise aneinander fixiert werden können. Auch ein anschließendes Umwickeln mit Schrumpffolie ist möglich und kann zur Herstellung fertiger Verpackungseinheiten mit einer Mehrzahl von gruppierten Getränkebehältern oder anderer Artikel dienen. Die erste Horizontalfördereinrichtung mit dem Transportmittel für den ersten Betriebsmodus kann wahlweise auch eine mehrteilige Förderkette mit Faltelementen zur Herstellung einer die einzelnen Artikel umhüllenden Kartonverpackung sein, was auch als "Wraparound" bezeichnet wird. Auch diese gefaltete und ggf. allseitig geschlossene Kartonverpackung kann wahlweise zusätzlich mit einer Folie umhüllt werden, wodurch eine besonders robuste Verpackungsart gebildet werden kann.

Grundsätzlich wird im vorliegenden Zusammenhang als erster Betriebsmodus oder als erste Betriebsart derjenige Modus verstanden, bei dem ein Abschnitt der Transportstrecke innerhalb der Verpackungsmaschine durch eine Horizontalfördereinrichtung mit einem Transportmittel gebildet ist, die bestimmte mechanische Eigenschaften aufweist, welche sich in bestimmten Eigenschaften signifikant vom alternativen Transportmittel einer zweiten oder anderen Horizontalfördereinrichtung unterscheiden, die in einem zweiten Betriebsmodus eingesetzt werden kann. Dieser zweite Betriebsmodus kann bspw. dadurch charakterisiert sein, dass die Artikel oder Behälter ohne Unterlage und in gruppierter Anordnung zu transportieren sind, um bspw. in einer nachfolgenden Verarbeitungs- oder Verpackungsstation mit Folie umhüllt zu werden, was auch als sog. "Shrink-only"-Verpackungsart bezeichnet werden kann. Die lose aneinander und ohne weitere Hilfsmittel stehend beförderten Artikel oder Behälter könnten nicht auf einer Förderkette mit aus der Förderebene auftauchenden Faltfingern befördert werden, da die Artikel oder Behälter mit hoher Wahrscheinlichkeit umkippen oder von der Förderebene herabfallen würden.

Eine ähnliche Problematik besteht auch bei einer Verpackungsart, bei der die gruppierten Artikel oder Behälter auf einem sog. Pad stehen, um im weiteren Verlauf der Behandlung mit einer Folie umhüllt zu werden. Diese als Pad bezeichnete Unterlage aus Karton oder Kunststoff weist keine überstehenden Ränder auf, die nach dem Falten einen Tray bilden und für eine gewisse Biegesteifigkeit sorgen könnten. Aus diesem Grund benötigt auch diese Verpackungsart eine weitgehend ebene und glattflächige Transportunterlage der Horizontalfördereinrichtung. Bei einer Förderung auf zwei oder mehr parallelen Förderkettenauflagen neigen die überstehenden seitlichen Ränder und/oder die zwischen benachbarten Förderketten befindlichen Abschnitte der flexiblen Unterlage zum Durchbiegen, wodurch die Gefahr entsteht, dass die Gebindeanordnung instabil wird und einzelne oder mehrere Behälter oder Artikel kippen bzw. von der Horizontalförderrichtung fallen.

Umgekehrt lassen sich Kartonbögen mit zu faltenden seitlichen Randabschnitten oftmals nicht sinnvoll und zuverlässig auf ebenen Fördermatten befördern, da sie dabei zum Verrutschen neigen könnten, was ebenfalls die Förderqualität beeinträchtigen könnte. Zudem fehlten bei einer solchen Transporteinrichtung die mechanischen Mittel zum Falten der Kartonränder.

Um diese Schwierigkeiten zu lösen und eine für die Förderung und Handhabung von Tray-Verpackungen und dergleichen Gebindeeinheiten geeignete und vorbereitete Verpackungsmaschine universell auch für andere Gebindearten einsetzbar zu machen, liefert die vorliegende Erfindung eine Transportstrecke für die geordnete horizontale Förderung von separaten Artikeln, Gebinden und/oder Verpackungseinheiten innerhalb einer Verpackungsmaschine, welche die erste Horizontalfördereinrichtung mit dem ersten Transportmittel wie bspw. wenigstens einem endlos umlaufenden Transportband für den ersten Betriebsmodus umfasst. Diese erste Horizontalfördereinrichtung wird in horizontaler Richtung aus dem Bereich des Transportwegs für die Artikel, Gebinde und/oder Verpackungseinheiten gebracht und durch eine mehrteilige zweite Horizontalfördereinrichtung mit jeweils wenigstens einer endlos umlaufenden Auflageebene ersetzt werden. Diese zweite Horizontalfördereinrichtung nimmt gemäß der Erfindung im zweiten Betriebsmodus die Position des Transportwegs ein und bildet somit denjenigen Teil der Transportstrecke, der im ersten Betriebsmodus von der zuvor aus dem Transportweg entfernten ersten Horizontalfördereinrichtung gebildet wird.

Die erste Horizontalfördereinrichtung ist mehrteilig ausgebildet bzw. weist ein mehrteilig ausgebildetes Transportmittel auf. Die erste Horizontalfördereinrichtung kann bspw. durch parallel umlaufende Transportketten gebildet sein, die zur Beförderung und Behandlung von Artikelgruppierungen mit einer Unterlage wie einem Kartonbogen, einer schalenartigen Aufnahme o. dgl. vorbereitet sein. Um diese Artikelgruppierungen zuverlässig und positionsgenau befördern und zudem ggf. während des Transports Kartonabschnitte nach oben falten zu können, kann eine Ausführungsvariante vorsehen, dass die Transportketten mit schwenkbaren Faltfingern o. dgl. versehen sind. Die erfindungsgemäße Transport- bzw. Horizontalfördereinrichtung weist eine Trennebene in bzw. parallel zur Längs- bzw. Transportrichtung auf. Diese wenigstens zwei Teile der ersten Horizontalfördereinrichtung sind für den ersten Betriebsmodus im Bereich der Trennebene zusammengefügt oder gering voneinander beabstandet und fungieren dabei als eine einzige Horizontalfördereinrichtung. Weiterhin können die wenigstens zwei Teile der ersten Horizontalfördereinrichtung für den zweiten Betriebsmodus im Bereich der Trennebene zu beiden seitlichen Richtungen der Transportstrecke auseinander gezogen und voneinander beabstandet sein.

Der Hauptzweck dieser Wechselmöglichkeit zwischen erster und zweiter Horizontalfördereinrichtung mit den jeweils zugehörigen Transportmitteln, die je nach Betriebsmodus denselben Transportweg für jeweils unterschiedliche Fördergüter bilden, ist die Anpassung an die unterschiedlichen mechanischen Eigenschaften der zu befördernden Gebindeeinheiten und Güter. Die für die störungsfreie Beförderung von größeren Verpackungseinheiten mit Kunststoff- oder Kartonunterlagen optimierten und ggf. mit Falteinrichtungen versehenen Kettenförderer sind naturgemäß ungeeignet für den Transport von einzelnen Artikeln mit gegenüber der Auflagefläche kleiner Grundfläche wie bspw. Getränkebehältern oder Flaschen, insbesondere wenn diese einen eingezogenen Boden aufweisen. Auf herkömmlichen Kettenförderern können solche Artikel nicht befördert werden, da sie Kippen oder Herabrollen würden, was mit erheblichen Störungen im Förderbetrieb verbunden wäre. Um nun eine vorhandene Verpackungsmaschine, die auf die Förderung und Verpackung von Artikelgruppierungen mit stabilem Boden vorbereitet ist, für die Förderung und Verpackung von alternativen Gebindegestaltungen mit einzelnen Artikeln, die erst später umwickelt und verpackt werden, zugänglich zu machen, sieht die Erfindung einen Wechsel der Horizontalfördereinheiten vor, um die Transportstrecke an die jeweils zu befördernden Güter anpassen und optimieren zu können.

Es sei nochmals darauf hingewiesen, dass es bei der erwähnten Wechselmöglichkeit der Horizontalfördereinrichtungen nicht zwingend notwendig ist, die erste Horizontalfördereinrichtung bzw. das erste Transportmittel vollständig aus der Maschine herauszunehmen. Es ist vielmehr denkbar, die erste Horizontalfördereinrichtung innerhalb der Maschine in eine sog. Parkposition zu bringen. Diese Parkposition ist eine Position innerhalb der Maschine, in welcher die Einrichtung in einem nicht aktiven Zustand verweilt, ohne dabei die Maschinenfunktionalität zu beeinträchtigen. Dabei kann die Parkposition bspw. eine räumliche Position neben der eigentlichen Transportebene innerhalb der Maschine bedeuten. Es ist also durchaus möglich, bei dem erwähnten Wechsel der Horizontalfördereinrichtungen die erste Horizontalfördereinrichtung, bzw. das erste Transportmittel, in eine sog. Parkposition zu bringen und dann anschließend ein zweites Transportmittel einer zweiten Horizontalfördereinrichtung an dessen Stelle in die Maschine einzusetzen bzw. in die benötigte Position zu bringen, damit die Transportstrecke wiederhergestellt ist.

Die zweite Horizontalfördereinrichtung ist quer zur Transportrichtung geteilt und durch zwei oder mehr im zweiten Betriebsmodus aneinander bzw. in Transportrichtung hintereinander gefügte Teile gebildet. Auf diese Weise kann die mehrteilige zweite Horizontalfördereinrichtung im ersten Betriebsmodus bspw. in einer Ruheposition oberhalb einer Förderebene abgelegt sein, wobei wenigstens zwei Teile vertikal übereinander gestapelt und/oder miteinander verbunden sein können. Weiterhin können die wenigstens zwei Teile der mehrteiligen zweiten Horizontalfördereinrichtung mit einer Hebevorrichtung zum vertikalen Heben und Senken in die bzw. aus der Ruhelage gekoppelt sein. Darüber hinaus kann die zweite Horizontalförderrichtung in die gewünschte Betriebslage gebracht werden, in dem wenigstens ein Teil der mehrteiligen zweiten Horizontalfördereinrichtung zur Herstellung der zweiten Betriebslage in Transportrichtung verschiebbar ist.

Die zwei oder mehr Teile der zweiten Horizontalfördereinrichtung sind im zweiten Betriebsmodus jeweils gering voneinander beabstandet, wobei eine Lücke mit zueinander weisenden Krümmungsradien der jeweiligen Bandumlenkungen gebildet ist. Auf diese Weise kann ein Kippen der noch nicht mit Folie oder einem anderen Verpackungsmittel umhüllten und/oder gegenseitig fixierten Behälter an dieser Trennstelle verhindert werden. Die zweite Horizontalfördereinrichtung ermöglicht die Förderung von Artikeln oder Behältern, die anschließend in einem sog. "Shrink-only"-Verfahren oder auch in einem sog. "Shrink-Pad"-Verfahren mit Schrumpffolie umhüllt und zu transportablen und stapelbaren Gebindeeinheiten zusammengehalten werden. Eine vorteilhafte Ausführungsvariante kann darüber hinaus vorsehen, die Lücke bzw. Trennstelle zwischen den in Transportrichtung hintereinander angeordneten Transportmitteln der zweiten Horizontalfördereinrichtung durch ein nicht angetriebenes Übergangselement zu überbrücken bzw. zu minimieren. Dieses Übergangselement kann bspw. durch einen Quersteg mit dreieckförmigem Querschnitt und flacher Oberseite gebildet sein, der berührungsfrei in den Spalt gelegt und an seitlichen Rahmenabschnitten fixiert sein kann. Bei geeigneter Dimensionierung kann ein solcher Quersteg einen annähernd absatzfreien Übergang für die darüber gleitenden Artikel, Gegenstände oder Behälter bilden und damit für deren stabile Beförderung sorgen, ohne dass die Gefahr der Beunruhigung oder des Kippens der Artikel an dieser Stelle besteht.

Die Erfindung betrifft weiterhin ein Verfahren zum Modifizieren einer Transportstrecke für die geordnete horizontale Förderung von separaten Artikeln, Gebinden und/oder Verpackungseinheiten und/oder zur Anpassung der Transportstrecke an unterschiedliche Beförderungsgüter, bei dem die Transportstrecke in einem ersten Betriebsmodus zumindest teilweise durch eine erste Horizontalfördereinrichtung mit wenigstens einem endlos umlaufenden Transportband gebildet wird, das für die Umschaltung in einen zweiten Betriebsmodus in horizontaler und/oder vertikaler Richtung aus dem Bereich des Transportwegs für die Artikel, Gebinde und/oder Verpackungseinheiten gebracht und durch eine mehrteilige zweite Horizontalfördereinrichtung mit jeweils wenigstens einer endlos umlaufenden Auflageebene ersetzt wird, wobei die zweite Horizontalfördereinrichtung im zweiten Betriebsmodus die Position des Transportwegs einnimmt und zumindest einen Teil der Transportstrecke bildet.

Das Verfahren sieht vor, dass die erste Horizontalfördereinrichtung mehrteilig ausgebildet ist und eine Trennebene in Längs- bzw. Transportrichtung aufweist, wobei die wenigstens zwei Teile der ersten Horizontalfördereinrichtung für den ersten Betriebsmodus im Bereich der Trennebene zusammengefügt oder gering voneinander beabstandet sind und als eine einzige Horizontalfördereinrichtung fungieren, und wobei die wenigstens zwei Teile der ersten Horizontalfördereinrichtung für den zweiten Betriebsmodus im Bereich der Trennebene zu beiden seitlichen Richtungen der Transportstrecke auseinander gezogen werden und voneinander beabstandet sind.

Das Verfahren sieht vor, dass die zweite Horizontalfördereinrichtung in Transportrichtung geteilt ist und durch zwei oder mehr im zweiten Betriebsmodus aneinander gefügte Teile gebildet ist, wobei die mehrteilige zweite Horizontalfördereinrichtung im ersten Betriebsmodus in einer Ruheposition oberhalb einer Förderebene abgelegt ist, wobei wenigstens zwei Teile vertikal übereinander gestapelt und/oder miteinander verbunden sind, und wobei die wenigstens zwei Teile der mehrteiligen zweiten Horizontalfördereinrichtung mit einer Hebevorrichtung zum vertikalen Heben und Senken in die bzw. aus der Ruhelage gekoppelt sind.

Schließlich kann das erfindungsgemäße Verfahren sinnvoll dadurch ergänzt werden, dass wenigstens ein Teil der mehrteiligen zweiten Horizontalfördereinrichtung zur Herstellung der zweiten Betriebslage in Transportrichtung verschoben wird.

Besonders vorteilhaft ist bei allen oben beschriebenen Varianten weiterhin, wenn diese jeweils mit demselben Antrieb der Transportstrecke koppelbar sind. Die auswechselbaren Horizontalfördereinrichtungen sind dazu vorzugsweise mit einheitlichen Anschlussrädern oder Koppeleinrichtungen o. dgl. versehen, die beim Verankern im Bereich der Transportstrecke die Wirkverbindung zwischen den Bandantrieben und den umlaufenden Bändern oder Ketten herstellen. Als Horizontalfördereinrichtungen kommen in diesem Zusammenhang insbesondere Mattenförderer, Kettenförderer oder Bandförderer o. dgl. in Frage. Fördereinrichtungen mit relativ glatten Oberflächen werden vorzugsweise für den Artikeltransport einzelner Artikel oder Behälter eingesetzt, während die Kettenförderer, die oftmals eine ausgeprägter Profilierung sowie relativ schmale Auflageflächen aufweisen, nur für den Transport von entsprechend geeigneten Verpackungseinheiten einzusetzen sind. Dies sind bspw. sog. Trays, d.h. Schalen zur Aufnahme der Artikel, die einen relativ stabilen Boden bilden, oder bspw. Kartonunterlagen, deren seitliche Ränder ggf. nach oben gefaltet werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt ein Maschinengestell einer Verpackungsmaschine mit einer Transportstrecke für Artikel in einer schematischen Seitenansicht.
Fig. 2 zeigt das Maschinengestell in einer perspektivischen Darstellung.
Fig. 3 zeigt eine perspektivische Ansicht eines Teils einer Horizontalfördereinrichtung.
Fig. 4 zeigt eine weitere Ansicht zweier Teile der Horizontalfördereinrichtung gemäß Fig. 3.
Fig. 5 zeigt eine detaillierte Seitenansicht eines Teiles der Horizontalfördereinrichtung gemäß Fig. 3.
Fig. 6 - Fig. 18 zeigen aufeinander folgende Verfahrensschritte, die für die Umrüstung einer Verpackungsmaschine erforderlich sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

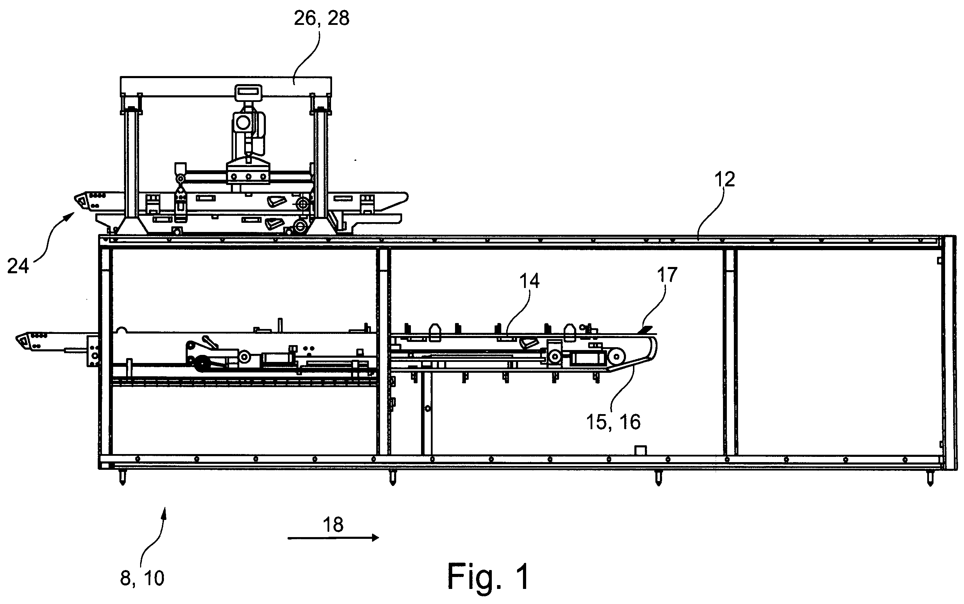

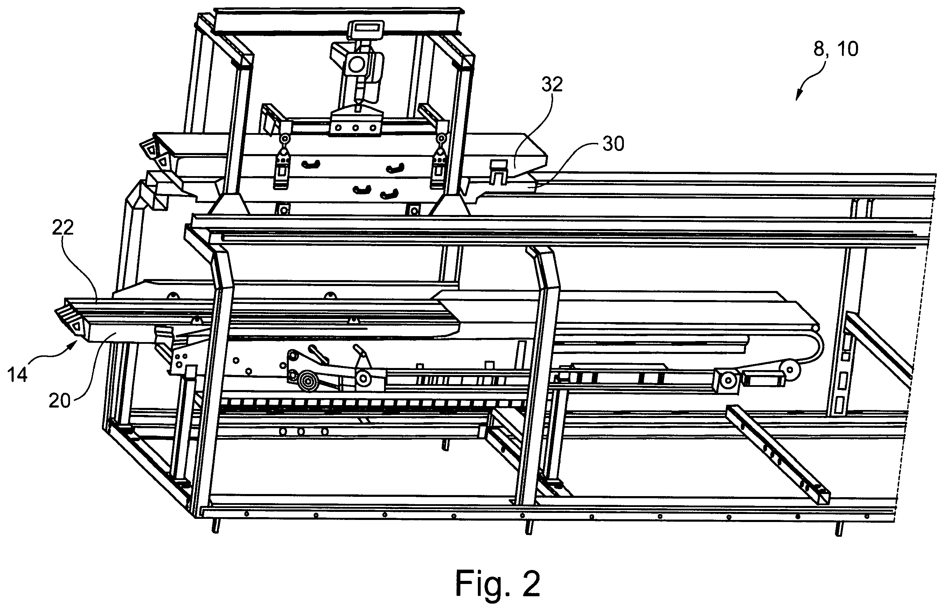

Die schematische Seitenansicht der Fig. 1 und die perspektivische Darstellung der Fig. 2 verdeutlichen anhand eines Ausführungsbeispiels die Anordnung einer erfindungsgemäßen Transportstrecke 10 für die geordnete horizontale Förderung von separaten Artikeln, Gebinden und/oder Verpackungseinheiten, die hier nicht dargestellt sind. Die horizontal innerhalb eines Maschinengestells 12 einer Verpackungsmaschine 8 oder einer anderen Fördermaschine für Artikel und Verpackungsgüter verlaufende Transportstrecke 10 umfasst eine erste Horizontalfördereinrichtung 14 mit einem ersten Transportmittel 15 in Gestalt einer endlos umlaufenden Transportkette 16, die sich in den Darstellungen der Figuren 1 und 2 in einem betriebsbereiten Zustand befindet, was im vorliegenden und folgenden Zusammenhang als erster Betriebsmodus bezeichnet ist. Die Transportkette 16 ist im gezeigten Ausführungsbeispiel mit einer Reihe von Manipulationselementen 17 versehen, die bspw. als Faltfinger oder als Einteilfinger ausgestaltet sein und fungieren können. Diese als Faltfinger ausgebildeten Manipulationselemente 17 dienen insbesondere dazu, während der Förderung von hier nicht dargestellten Kartonunterlagen deren Seitenränder nach oben zu falten, um auf diese Weise sog. Trays für die geförderten Behälter zu bilden.

Wie die Fig. 2 verdeutlicht, ist die erste Horizontalfördereinrichtung 14 bzw. das erste Transportmittel 15, die/das in den Figuren 1 und 2 die Transportstrecke 10 bildet, mehrteilig ausgebildet und weist eine Trennebene in Längs- bzw. Transportrichtung 18 auf. Die beiden Teile, d.h. die rechte Hälfte 20 und die linke Hälfte 22 der ersten Horizontalfördereinrichtung 14 sind für den ersten Betriebsmodus im Bereich der Trennebene zusammengefügt oder gering voneinander beabstandet und fungieren dabei als eine einzige Horizontalfördereinrichtung 14 bzw. als ein einziges erstes Transportmittel 15, zumal die darauf umlaufenden Bandabschnitte mit synchronen Umlaufgeschwindigkeiten bewegt werden. Gemäß der beschriebenen Ausführungsvariante der vorliegenden Erfindung können die beiden Hälften 20 und 22 der ersten Horizontalfördereinrichtung 14 zur Herstellung des zweiten Betriebsmodus im Bereich der Trennebene zu beiden seitlichen Richtungen der Transportstrecke 10 auseinander gezogen und dadurch voneinander getrennt werden. Der dadurch entstehende Platz ermöglicht das Einsetzen einer insbesondere zweiteiligen zweiten Horizontalfördereinrichtung 24, deren beide Teile jeweils endlos umlaufende Auflageebenen aufweisen. Diese zweite Horizontalfördereinrichtung 24 nimmt gemäß der Erfindung im zweiten Betriebsmodus die Position des Transportwegs ein und bildet somit denjenigen Teil der Transportstrecke 10, der im ersten Betriebsmodus von der getrennten und seitlich verschobenen ersten Horizontalfördereinrichtung 14 gebildet wird.

Die zweite Horizontalfördereinrichtung 24 befindet sich im ersten Betriebsmodus, in dem die Transportstrecke 10 durch die erste Horizontalfördereinrichtung 14 gebildet ist, als gepacktes Modul bspw. in einem Aufbaurahmen 26 oberhalb des Maschinengestells 12, der als Portalkran 28 zum senkrechten Heben und Senken des austauschbaren Moduls ausgebildet ist. Das Modul kann somit zwischen der Förderebene der Transportstrecke 10 und einer Stapel- oder Aufbewahrungsebene innerhalb des Aufbaurahmens 26 bewegt werden.

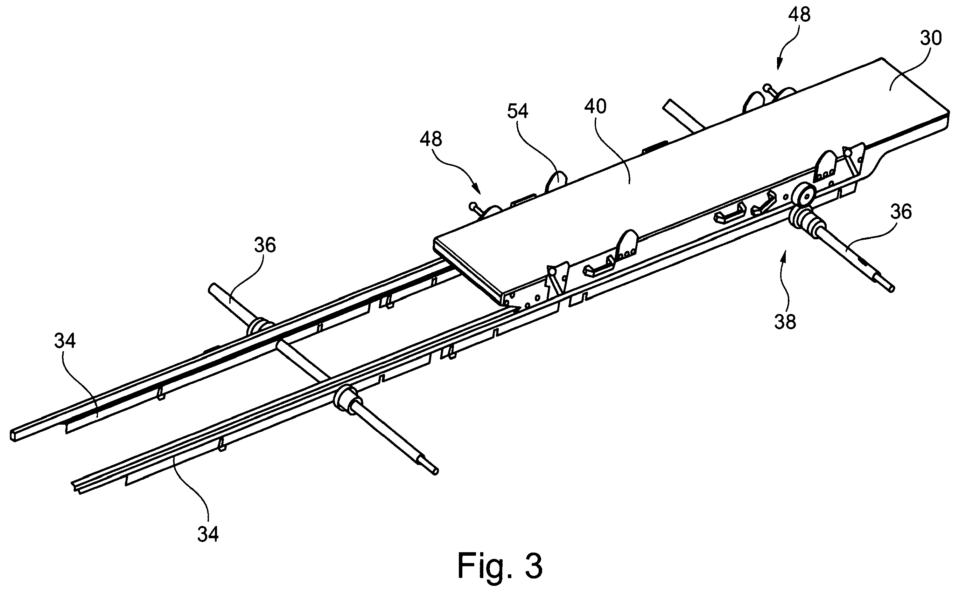

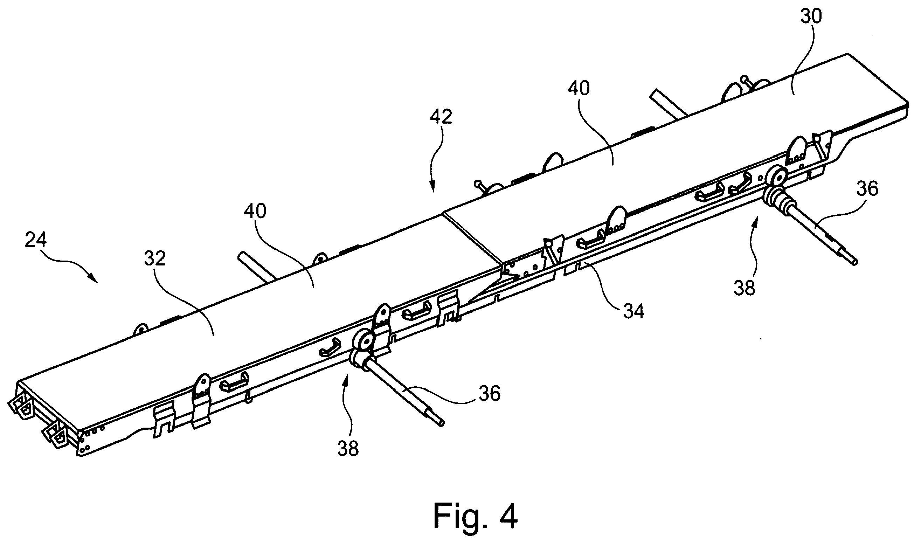

Die zweite Horizontalfördereinrichtung 24 bildet ein zweites Transportmittel 25 und ist im gezeigten Ausführungsbeispiel mehrteilig ausgebildet. Das zweite Transportmittel 25 kann insbesondere aus zwei quer zur Transportrichtung geteilten Abschnitten bestehen. Entsprechend der in den Figuren gezeigten Ausführungsvariante ist das zweite Transportmittel 25 durch zwei im zweiten Betriebsmodus in Transportrichtung 18 aneinander gefügte Teile 30 und 32 gebildet, wie dies bspw. aus den Figuren 3 und 4 hervorgeht. Somit kann die zweiteilige zweite Horizontalfördereinrichtung 24 bzw. das zweiteilige zweite Transportmittel 25 im ersten Betriebsmodus (Fig. 1, Fig. 2) in ihrer/seiner Ruheposition oberhalb der Förderebene abgelegt sein, wobei die beiden Teile 30 und 32 vorzugsweise vertikal übereinander gestapelt und bspw. zusätzlich miteinander verbunden sind. Zur Umstellung in den zweiten Betriebsmodus können die beiden miteinander gekoppelten Teile 30 und 32 der zweiten Horizontalfördereinrichtung 24 mittels des als Hebevorrichtung zum vertikalen Heben und Senken fungierenden Portalkrans 28 aus dem Aufbaurahmen 26 in die Transportstrecke 10 abgesenkt oder von dort wieder angehoben werden. Zusätzlich kann die zweite Horizontalfördereinrichtung 24 bzw. das zweite Transportmittel 25 in die gewünschte Betriebslage gebracht werden, indem der untere Teil 30 (Figuren 1 und 2) der zweiteiligen zweiten Horizontalfördereinrichtung 24 zur Herstellung des zweiten Betriebsmodus vom oberen Teil 32 entkoppelt und in Transportrichtung 18 verschoben wird (Fig. 3), bevor der obere Teil 32 an seinen Einbauplatz gesenkt wird (Fig. 4), der sich unmittelbar unterhalb des Aufbaurahmens 26 befindet. Eine Längs- oder Querverschiebung des oberen Teils 32 ist bei dieser Ausführung bzw. Anordnung der zweiten Horizontalfördereinrichtung 24 somit zur Herstellung des zweiten Betriebsmodus nicht vorgesehen.

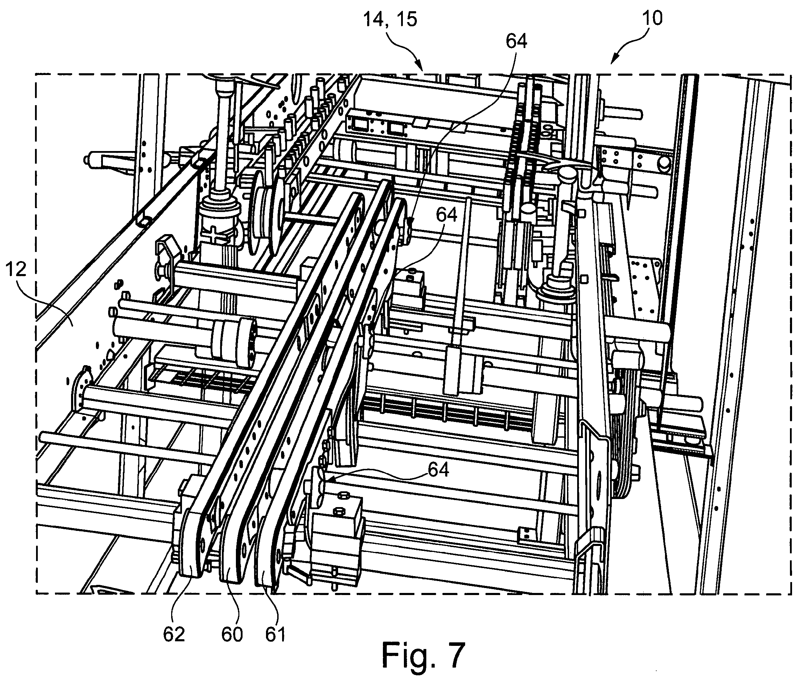

Die schematische Perspektivdarstellung der Fig. 3 verdeutlicht die Verankerung der beiden Teile 30 und 32 der zweiten Fördereinrichtung 24, die jeweils fluchtend hintereinander auf Längsschienen 34 des Maschinengestells 12 abgesetzt und dort fixiert werden und auf diese Weise das zweite Transportmittel 25 bilden. In den Längsschienen 34 sind zudem Antriebswellen 36 gelagert, durch welche mittels einer Zahnradpaarung 38 mit Stirn- oder Schrägverzahnung eine Drehantriebsbewegung von einem Maschineantrieb (nicht dargestellt) auf die Antriebsrollen oder -walzen (nicht gezeigt) zum Antrieb der Fördermatten 40 oder des Transportbandes 16 der ersten Horizontalfördereinrichtung 14 (Fig. 1) übertragen werden kann. Die Antriebswellen 36 können (nicht dargestellt) aber auch bspw. unterhalb der Längsschienen 34 separat in Seitenwangen oder anderen tragenden Abschnitten des Maschinengestells 12 der Maschine 8 gelagert sein, wie dies bspw. aus Fig. 7 hervorgeht.

Die beiden Teile 30 und 32 der zweiten Horizontalfördereinrichtung 24 sind im zweiten Betriebsmodus gemäß Fig. 4 sehr gering voneinander beabstandet, so dass eine sehr schmale Lücke bzw. ein sehr schmaler Spalt 42 mit zueinander weisenden Krümmungsradien der jeweiligen Bandumlenkungen gebildet ist. Je geringer die Krümmungsradien an der Bandumlenkung sind, desto näher können die Teile 30 und 32 aneinander gerückt werden und desto geringer ist die Spaltbreite an der Übergangsstelle, was für den störungsfreien Behälter-, Flaschen- oder Artikeltransport wichtig ist, da bei einem zu großen Spalt die beförderten Artikel leicht in Unruhe gebracht werden und kippen können. Eine sinnvolle Größenordnung für den Krümmungsradius der Bandumlenkung kann bspw. bei ca. 10 mm oder weniger liegen, wodurch eine Spaltbreite von ebenfalls ca. 10 mm oder weniger realisierbar ist. Die untere Grenze eines sinnvollen Krümmungsradius wird durch die Biege- oder Umlenkungsmöglichkeit der Fördermatte 40 definiert. Sobald die Materialgrenze der Fördermatte 40 erreicht ist, wird diese bei der Umlenkung nicht mehr sauber und ruhig geführt, sondern beginnt sich von der Umlenkrolle abzuheben und unregelmäßig zu laufen, wodurch die beförderten Artikel ebenfalls in Unruhe gebracht werden.

Eine vorteilhafte Ausführungsvariante kann darüber hinaus vorsehen, diese Lücke 42 bzw. Trennstelle zwischen den in Transportrichtung 18 hintereinander angeordneten Transportmitteln 25 der zweiten Horizontalfördereinrichtung 24 durch ein nicht angetriebenes Übergangselement (hier nicht dargestellt) zu überbrücken bzw. zu minimieren. Dieses Übergangselement kann bspw. durch einen Quersteg mit dreieckförmigem Querschnitt und flacher Oberseite gebildet sein, der berührungsfrei in den Spalt 42 gelegt und an seitlichen Rahmenabschnitten des Maschinengestells 12 und/oder im Bereich der Längsschienen 34 fixiert sein kann. Bei geeigneter Dimensionierung kann ein solcher Quersteg einen annähernd absatzfreien Übergang für die darüber gleitenden Artikel, Gegenstände oder Behälter bilden und damit für deren stabile Beförderung sorgen, ohne dass die Gefahr der Beunruhigung oder des Kippens der Artikel an dieser Stelle besteht.

Die beschriebene Wechselmöglichkeit zwischen erster und zweiter Horizontalfördereinrichtung 14 und 24, die je nach Betriebsmodus denselben Transportweg 10 für jeweils unterschiedliche Fördergüter bzw. Gebindeeinheiten bilden, dient der Anpassung an die unterschiedlichen Eigenschaften der beförderten Güter, insbesondere an die Anforderungen an die sich bewegende Oberfläche der Transportmittel 15, 25. Die für die störungsfreie Beförderung von größeren Verpackungseinheiten bzw. Gebinden mit stabilem Boden aus Karton oder Kunststoff o. dgl. geeigneten oder optimierten Kettenförderer sind gänzlich ungeeignet für den Transport von einzelnen Artikeln mit kleiner Grundfläche wie bspw. Getränkebehältern oder Flaschen. Auf den Transportbändern oder -ketten herkömmlicher Kettenförderer neigen solche Artikel zum Kippen oder Herabrollen, weshalb Packmaschinen mit derartigen Kettenförderern bisher nicht dazu in der Lage waren, Gebindeeinheiten in sog. "Shrink-only"-Konfiguration oder in sog. "Shrink-Pad"-Konfiguration zu verarbeiten. Hierbei werden einzelne Behälter zu Gebindeanordnungen - mit oder ohne ein sog. "Pad" als Unterlage - zusammengefasst und gemeinsam zu einem Folieneinschlagmodul o. dgl. transportiert. Die Erfindung ermöglicht einen Wechsel der Horizontalfördereinheiten, um die Transportstrecke an die jeweils zu befördernden Güter anpassen und optimieren zu können.

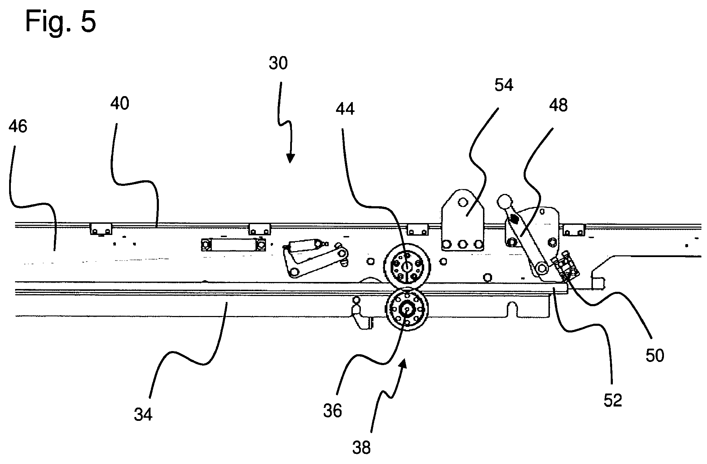

Die Seitenansicht der Fig. 5 zeigt eine detaillierte Teildarstellung des vorderen bzw. unteren Teils 30 der Horizontalfördereinrichtung 24 gemäß Fig. 3. Dort ist deutlich die Zahnradpaarung 38 zur Drehantriebsübertragung von der in der Längsschiene 34 gelagerten Antriebswelle 36 auf die Antriebsrolle 44 zum Antrieb der Fördermatte 40 erkennbar. Die Längsschiene 34 stützt gleichzeitig den Rahmen 46 des Teils 30, an dessen Längsseiten mehrere weitere Funktionselemente angeordnet sind. Dies sind bspw. ein schwenkbarer Klemmhebel 48, der manuell betätigbar ist und mit einer Klemmbacke 50 zusammenwirkt, die zum lösbaren Eingriff in eine an der Längsseite der Längsschiene 34 angeordnete Klemmschiene 52 dient. Vorzugsweise sind mehrere solcher Klemmhebel 48 vorgesehen, typischerweise mindestens vier, wie dies in Fig. 3 angedeutet ist.

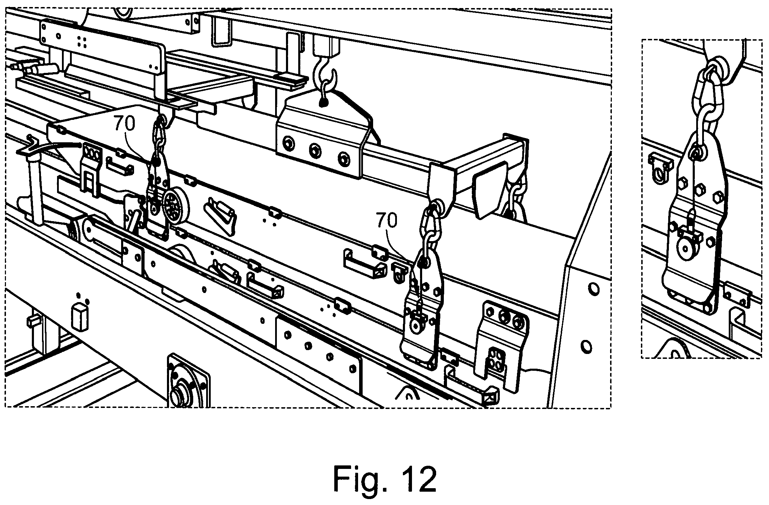

Diese manuell betätigbaren Klemmhebel 48 dienen weiterhin dazu, mittels einer Hebelbewegung das Transportmittel 25 zwischen einem Arbeitsmodus (Position zur Betriebsbereitschaft) und einem Transport- bzw. Wechselmodus (in Längsrichtung auf den Schienen 34 verfahrbar) zu wechseln. Wie auch anhand der Figuren 12 bis 15 verdeutlicht werden wird, kann das in die Längsschienen 34 abgesenkte untere Teil 30 des zweiten Transportmittels 25 mittels der Klemmhebel 48 um einen geringen Betrag von bspw. ca. 5 mm angehoben werden, um das Modul im Arbeitsmodus zu fixieren. In abgesenkter Lage kann das Modul 30 dagegen in Transportrichtung 18 auf den Längsschienen 34 bewegt werden, um es in die gewünschte Endlage bzw. aus dieser bringen zu können. Nach Erreichung der Endlage werden die Klemmhebel 48 umgelegt, um das Modul 30 anzuheben, wodurch es im Maschinengestell 12 unverrückbar fixiert ist. Soll das Modul 30 dagegen wieder aus der Transportstrecke 10 entfernt werden, so ist es zunächst mittels der Klemmhebel 48 abzusenken, um es auf den Längsschienen 34 gegen die Transportrichtung 18 verschieben zu können.

Weiterhin sind an den Längsseiten des Rahmens 46 mehrere Zugösen 54 angeordnet, die zur Verbindung mit entsprechenden Haken des Portalkrans 28 bzw. zur Verbindung mit dem zweiten Teil 32 des Fördereinrichtung 24 dienen, wenn der untere Teil 30 im ersten Betriebsmodus am oberen Teil 32 befestigt ist und beide Teile im Aufbaurahmen 26 oberhalb der Förderebene aufgehängt sind.

Die Horizontalfördereinrichtungen 14, 24 bzw. die Transportmittel 15, 25 sind jeweils mit eigenen Antrieben versehen, bspw. mit angeflanschten Elektromotoren o. dgl. (nicht dargestellt). Die beschriebene vorteilhafte Weise, die auswechselbaren Horizontalfördereinrichtungen 14, 24 anzutreiben, soll nicht als Einschränkung verstanden sein, da eine Vielzahl von Möglichkeiten zur Verfügung steht, wie die Transportmittel 15, 25 anzutreiben sind.

Es sei darauf hingewiesen, dass es zahlreiche weitere Möglichkeiten und Varianten gibt, die dem Fachmann zur Verfügung stehen, ohne dass er durch entsprechende Auswahl den Erfindungsgedanken ändert oder den Schutzbereich der Erfindung verlässt.

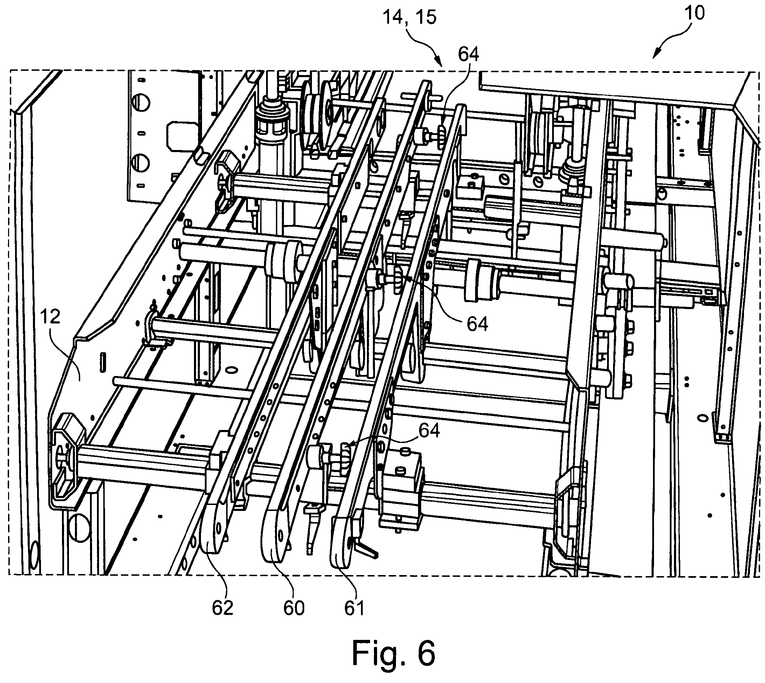

Die nachfolgend beschriebenen Figuren 6 bis 18 zeigen anhand eines Ausführungsbeispiels das Auswechseln von Kettenförderern, die zur horizontalen Beförderung von Gebindeeinheiten mit stabilem Boden geeignet sind, gegen zweiteilige Mattenkettenmodule. Ein solcher Umbau ist normalerweise von mindestens zwei Personen durchführbar, wobei die beschriebene Reihenfolge normalerweise einzuhalten ist. Sofern umlaufende Ketten zur Gebindeformung verwendet werden, bspw. Ketten mit daran beweglich gelagerten Faltfingern o. dgl., so sind diese zunächst in seitliche Richtung zu den Längsseiten der Transportstrecke 10 hin zu verschieben. Weiterhin kann es notwendig sein, Antriebselemente für die einzusetzenden Mattenkettenmodule zu positionieren. Dies können bspw. Antriebszahnräder sein, die in axialer Richtung auf Antriebswellen verschoben und vorzugsweise an bestimmten Positionen einrasten können, so dass die Antriebszahnräder der in einem späteren Verfahrensschritt in vertikaler Richtung eingesetzten Mattenkettenmodule in Verzahnungseingriff mit den Antriebszahnrädern der Verpackungsmaschine 8 gebracht werden können.

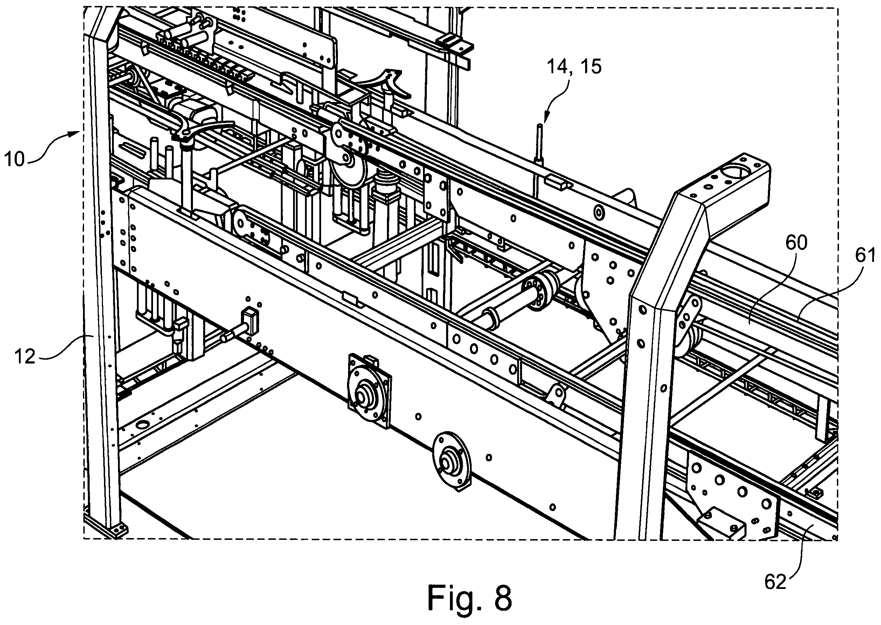

Die perspektivische Ansicht der Fig. 6 zeigt drei parallele Antriebsriemen 60, 61 und 62, die gemeinsam das erste Transportmittel 15 der ersten Horizontalfördereinrichtung 14 bilden. Um das erste Transportmittel 15 aus dem Bereich der Transportstrecke 10 beringen zu können, sind zunächst mehrere Feststellschrauben 64 am Rahmen des ersten, mittleren Antriebsriemens 60 zu lösen, bevor entsprechend Fig. 7 die drei Antriebsriemenmodule 60, 61 und 62 auf Querträgern des Maschinengestells 12 zusammengeschoben werden, bis sie nah beieinander liegen und aneinander stoßen. In dieser Lage werden die drei Feststellschrauben 64 wieder fixiert, wodurch der mittlere, erste Antriebsriemen 60 mit dem rechts davon liegenden zweiten Antriebsriemen 61 verbunden wird. Die Antriebsriemenmodule 60, 61 und 62 können bspw. an ihren Rahmen jeweils über Klemmverschraubungen mit den Querträgern des Maschinengestells 12 verbunden und an ihren Positionen fixiert sein. Um ihre Positionen zu verändern, sind diese Klemmverschraubungen zunächst zu lösen, bevor die Riemenmodule gemäß Fig. 8 an die seitlichen Ränder des Maschinengestells 12 und damit der Transportstrecke 10 verschoben werden können. Wie dort verdeutlicht, sind die mittels der Feststellschrauben 64 miteinander verbundenen ersten und zweiten Antriebsriemen 60, 61 an die rechte Längsseite der Transportstrecke 10 verschoben, während das zweite Antriebsriemenmodul 62 an die linke Längsseite der Transportstrecke 10 verschoben ist. Das erste Transportmittel 15 befindet sich in dieser Anordnung bereits nicht mehr in der betriebsbereiten ersten Betriebslage. Ggf. können weitere Antriebs- und/oder Manipulationseinrichtungen zur Verpackung aus dem Eingriffsbereich der Transportstrecke 10 gebracht werden, bspw. eine oberhalb der Förderebene befindliche, hier nicht dargestellte Gebindeformeinheit, die durch mehrere umlaufende Riemen gebildet sein kann, an denen jeweils Stege, Querstäbe o. dgl. verankert sein können, die zur Gebindeformung während der Förderung der Artikel dienen. Sofern solche Gebindeformeinheiten vorhanden sind, werden diese vorzugsweise in entsprechender Weise an die Längsseiten der Transportstrecke 10 verschoben und dort fixiert.

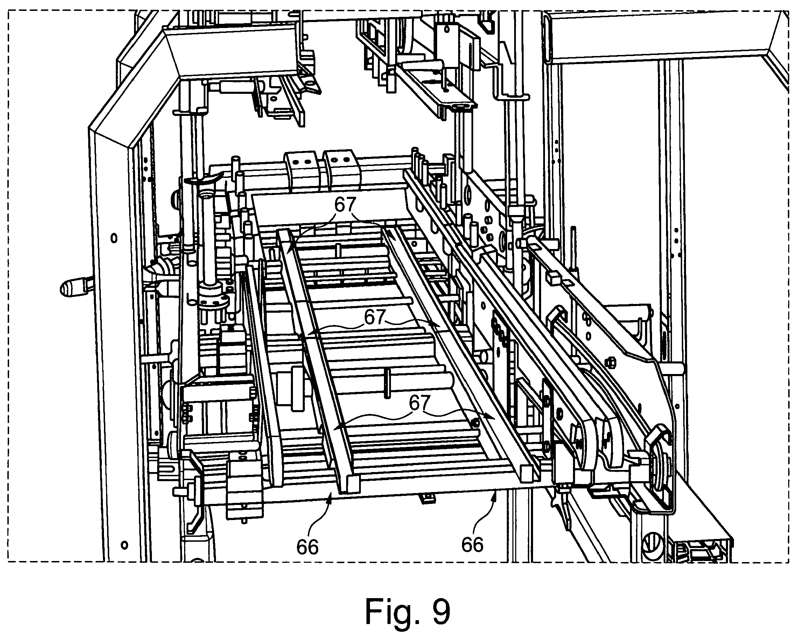

Die perspektivische Darstellung der Fig. 9 verdeutlicht einen weiteren Schritt der Umrüstung vom ersten Betriebsmodus in den zweiten Betriebsmodus. Dort werden mindestens zwei parallele Laufschienen 66 im Bereich der Transportstrecke 10 eingelegt, die auf den zuvor erwähnten Querstreben oder Querträgern des Rahmengestells 12 ruhen. Die beiden parallelen Laufschienen 66 bestehen im gezeigten Ausführungsbeispiel aus insgesamt sechs Schienensegmenten 67, die als Laufschienen und Auflage für das nachfolgend zu montierende zweite Transportmittel 25 dienen, welches für den Artikeltransport im zweiten Betriebsmodus der Verpackungsmaschine 8 vorgesehen ist.

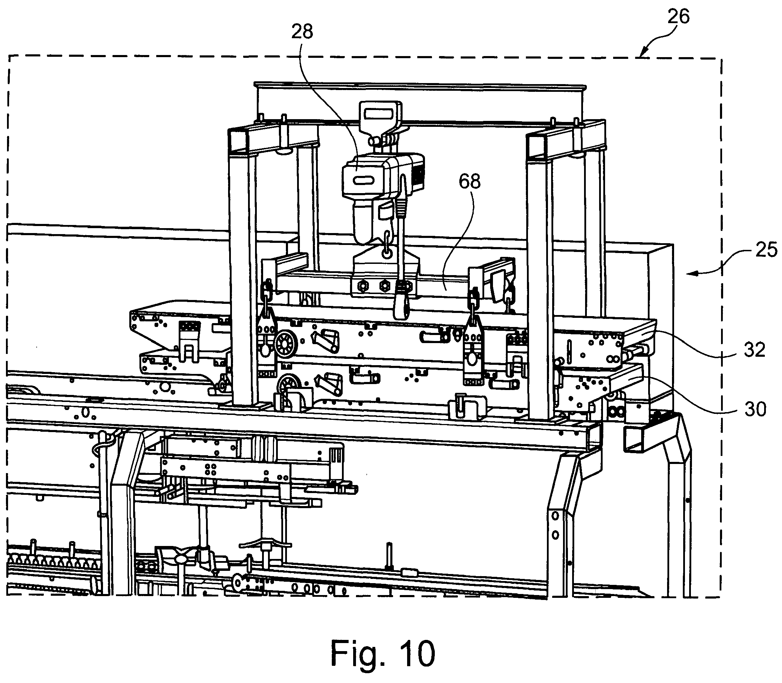

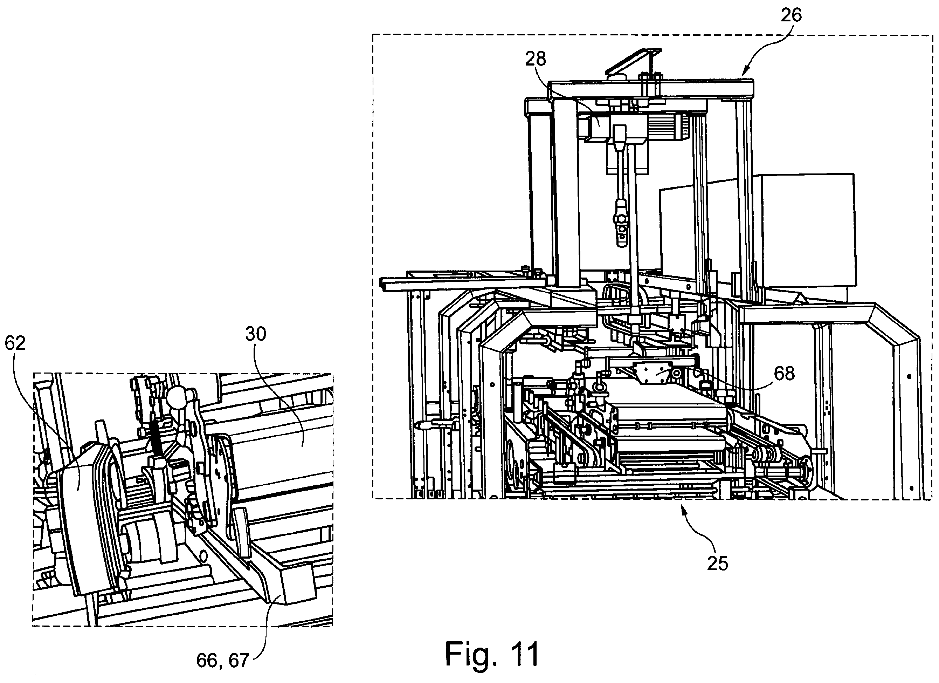

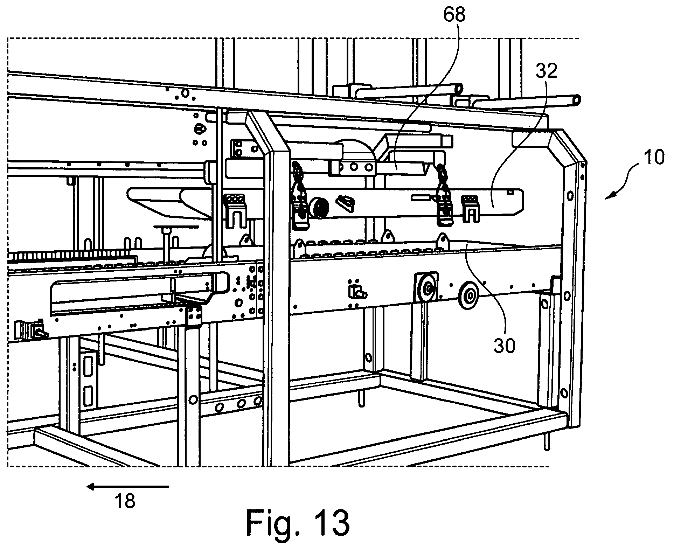

Die nachfolgend beschriebenen Figuren 10 bis 18 zeigen in aufeinander folgenden Schritten die Installation des zweiten Transportmittels 25 zur Herstellung des zweiten Betriebsmodus der Verpackungsmaschine 8. Die übereinander gestapelten und miteinander verbundenen beiden Teile 30 und 32 des zweiten Transportmittels 25 befinden sich im Aufbauraumen 26 und sind dort auf Querträgern abgelegt, die zum Absenken der beiden Teile 30 und 32 mittels des Portalkrans 28 zu entnehmen sind. Der obere Teil 32 des Mattenkettenförderers ist hierbei an einer Hubtraverse 68 verankert, die mittels des Portalkrans 28 in vertikaler Richtung auf und ab bewegbar ist. Der untere Teil 30 ist normalerweise am oberen Teil 32 verankert, bis die beiden Teile im Bereich der Transportstrecke 10 voneinander getrennt werden, wie dies in den Figuren 12 und 13 verdeutlicht ist. Entsprechend Fig. 10 werden die mit der Hubtraverse 68 verbundenen Mattenkettenmodule des zweiten Transportmittels 25 zunächst mit dem Kettenzug des Portalkrans 28 aus der Parkposition leicht angehoben, um die hier nicht näher bezeichneten Querstützen entnehmen zu können. Anschließend werden die beiden zusammenhängenden Module des zweiten Transportmittels 25 auf die Schienensegmente 67 der Laufschienen 66 abgesenkt, bis der untere Teil 30 dort aufliegt, wie dies in Fig. 11 gezeigt ist. Die Hubtraverse 68 ist dadurch entlastet, bleibt aber zunächst am oberen Teil 32 des zweiten Transportmittels 25 eingehängt. Nach dem Absenken müssen die beiden Module 30 und 32 auf den Laufschienen 66 beweglich und in Transportrichtung verfahrbar sein. Wichtig bei diesem Verfahrensschritt ist, dass die Module 30, 32 kollisionsfrei abgesenkt und exakt auf den Laufschienen aufgesetzt werden.

Anschließend sind entsprechend Fig. 12 vier Sicherungsbolzen 70 an den Koppelstellen zwischen den beiden Modulen 30 und 32 zu entriegeln, um die beiden Module voneinander trennen zu können, ohne dass der obere Teil 32 schon von der Hubtraverse 68 getrennt wird. Die Sicherungsbolzen 70 können hierzu in eine Position umgestellt werden, die einer Parkposition entspricht. Während das untere Mattenkettenmodul 30 nun auf den Laufschienen 66 aufliegt und in Längsrichtung verschoben werden kann, wird mittels des Portalkrans 28 und der Hubtraverse 68 das noch immer dort verankerte obere Mattenkettenmodul 32 entsprechend Fig. 13 leicht angehoben, damit das untere Mattenkettenmodul 30 störungsfrei in Transportrichtung 18 der Transportstrecke 10 verschoben werden kann.

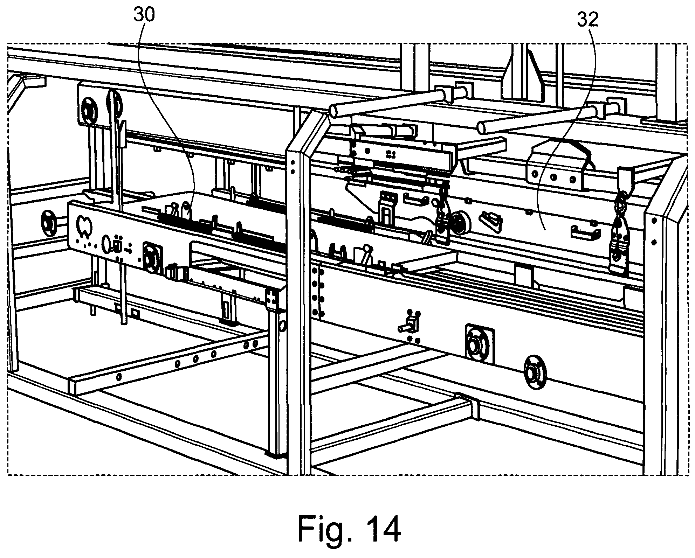

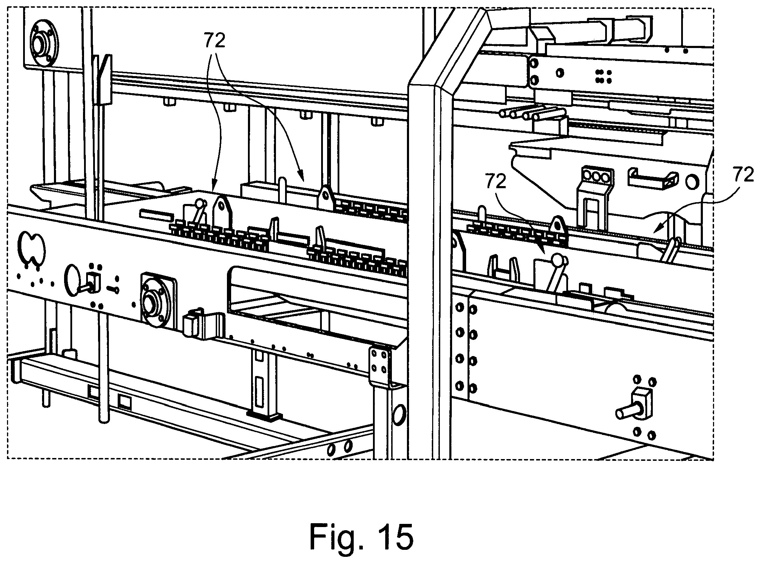

Das Verfahren des unteren Mattenkettenmoduls 30 in Transportrichtung 18 in seine Arbeitsposition zwischen die Schließketten der Gebindeformeinheit ist in Fig. 14 gezeigt. Die richtige Endlage für das Modul 30 kann ggf. durch einen Einrastvorgang definiert sein. Antriebselemente wie Zahnräder, die dabei zum Eingriff kommen, müssen langsam überfahren werden, um eine Beschädigungsgefahr zu reduzieren. Die Fixierung des unteren Mattenkettenmoduls 30 in seiner Arbeitsposition, welche den zweiten Betriebszustand der Verpackungsmaschine 8 ermöglicht, ist in Fig. 15 nochmals illustriert. Die Verriegelung erfolgt durch vier Sicherungshebel 72, die umgelegt werden können, wodurch das Modul 30 ggf. leicht angehoben und in einer definierten Arbeitsposition fixiert werden kann.

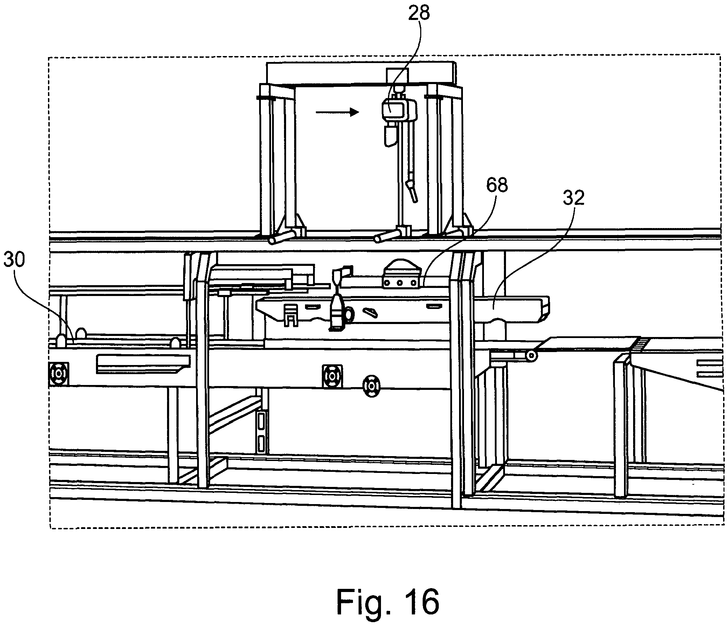

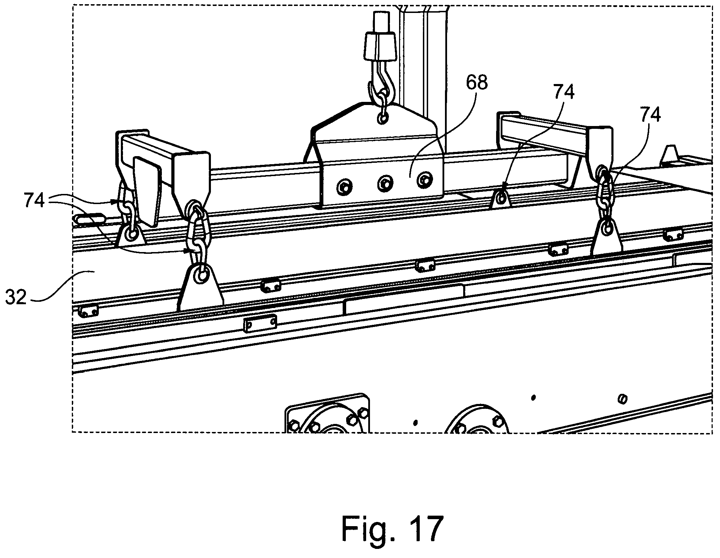

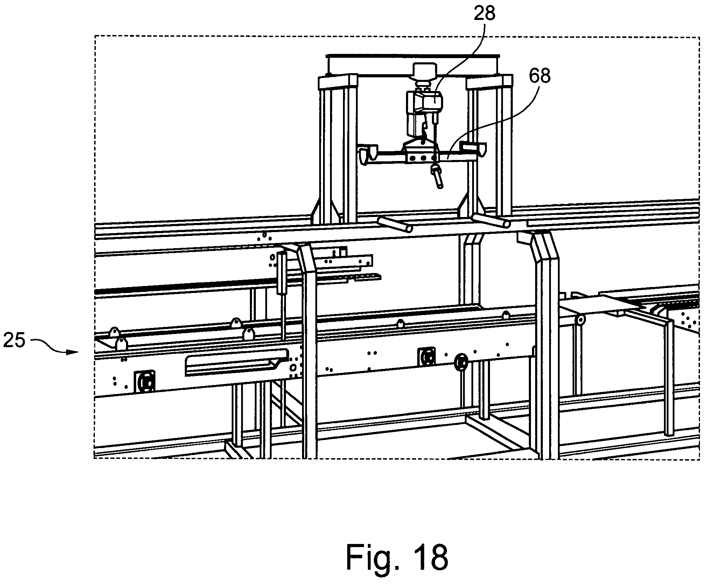

Gemäß Fig. 16 wird anschließend der Portalkran 28 in Pfeilrichtung entgegen der Transportrichtung verschoben und die Hubtraverse 68 mit dem daran aufgehängten oberen Mattenkettenmodul 32 in die richtige Absenkposition nach unten bewegt. Diese Absenkposition kann bspw. durch einen horizontalen Endanschlag am Kettenzug definiert sein. Die seitlich am Rahmen des oberen Mattenkettenmoduls 32 angeordneten Laschen werden auf entsprechende Auflagepunkte seitlich der Laufschienen 66 abgesenkt, wobei die Auflage aller vier oder mehr Laschen überprüft werden sollte. Entsprechend Fig. 17 kann anschließend die Hubtraverse 68 durch Lösen von vier Lastschäkeln 74 vom oberen Mattenkettenmodul 32 getrennt werden. Die Darstellung der Fig. 18 zeigt das anschließende Anheben der Hubtraverse 68 mit dem Kettenzug des Portalkrans 28, bis die obere Endstellung erreicht ist. Das zweite Transportmittel 25 mit den beiden hintereinander und mit geringstmöglicher Lücke an der Stoßstelle angeordneten Mattenkettenförderern 30 und 32 befindet sich nun in der gewünschten zweiten Betriebslage und ist einsatzbereit. Ggf. kann die Hubtraverse 68 zusätzlich gesichert werden, bspw. mit den Querstreben, die zuvor als Auflage für das in Ruhelage befindliche zweite Transportmittel dienen konnten. Die Hubtraverse 68 kann zudem wahlweise auf diese Querstreben abgesenkt werden, bis die Kette des Portalkrans entspannt ist. Darüber hinaus können ggf. weitere Führungs- und/oder Leitelemente montiert werden, sofern dies notwendig ist. Dies können bspw. Kartonführbleche bei einem Übergang zur Zuschnittzufuhr o. dgl. sein.

Die Demontage des zweiten Transportmittels 25 und sein Austausch gegen das erste Transportmittel 15 zur Herstellung des ersten Betriebsmodus der Verpackungsmaschine 8 erfolgt in umgekehrter Reihenfolge wie oben anhand der Figuren 6 bis 18 beschrieben.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 8: Maschine, Verpackungsmaschine
- 10: Transportstrecke
- 12: Maschinengestell
- 14: Erste Horizontalfördereinrichtung
- 15: Erstes Transportmittel
- 16: Transportband
- 17: Manipulationselement
- 18: Transportrichtung
- 20: Rechte Hälfte
- 22: Linke Hälfte
- 24: Zweite Horizontalfördereinrichtung
- 25: Zweites Transportmittel
- 26: Aufbaurahmen
- 28: Portalkran
- 30: Unterer Teil, unteres Mattenkettenmodul
- 32: Oberer Teil, oberes Mattenkettenmodul
- 34: Längsschienen
- 36: Antriebswelle
- 38: Zahnradpaarung
- 40: Fördermatte
- 42: Lücke, Spalt
- 44: Antriebsrolle
- 46: Rahmen
- 48: Klemmhebel
- 50: Klemmbacke
- 52: Klemmschiene
- 54: Zugöse
- 60: Erster Antriebsriemen, erstes Antriebsriemenmodul
- 61: Zweiter Antriebsriemen, zweites Antriebsriemenmodul
- 62: Dritter Antriebsriemen, drittes Antriebsriemenmodul
- 64: Feststellschraube
- 66: Laufschiene
- 67: Schienensegment
- 68: Hubtraverse
- 70: Sicherungsbolzen
- 72: Sicherungshebel
- 74: Lastschäkel

## Patentansprüche

1. Maschine (8) zur Verarbeitung und/oder Verpackung von Gegenständen mit einer im Wesentlichen horizontalen Transportstrecke (10) zur Förderung von Artikeln, Gebinden und/oder Verpackungseinheiten, die eine erste Horizontalfördereinrichtung (14) mit wenigstens einem Transportmittel (15) für einen ersten Betriebsmodus umfasst, welche zur Herstellung mindestens eines weiteren Betriebsmodus durch eine weitere Horizontalfördereinrichtung (24) mit wenigstens einem zum ersten Transportmittel (15) unterschiedlichen zweiten Transportmittel (25) auswechselbar ist, wobei das erste Transportmittel (15) in horizontaler und/oder vertikaler Richtung aus dem Bereich der Transportstrecke (10) für die Artikel, Gebinde und/oder Verpackungseinheiten bringbar und durch eine mehrteilige zweite Horizontalfördereinrichtung (24) mit jeweils wenigstens einer endlos umlaufenden Auflageebene ersetzbar ist, welche zweite Horizontalfördereinrichtung (24) in einem ersten Betriebsmodus in einer Ruheposition oberhalb einer Förderebene abgelegt ist und in einem zweiten Betriebsmodus die Position des Transportwegs einnimmt und einen Teil der Transportstrecke (10) bildet, wobei die erste Horizontalfördereinrichtung (14) mehrteilig ausgebildet ist und eine Trennebene in Längs- bzw. Transportrichtung (18) aufweist, wobei die wenigstens zwei Teile der ersten Horizontalfördereinrichtung (14) für den ersten Betriebsmodus im Bereich der Trennebene zusammengefügt oder gering voneinander beabstandet sind und als eine einzige Horizontalfördereinrichtung fungieren, und wobei die wenigstens zwei Teile der ersten Horizontalfördereinrichtung (14) für den zweiten Betriebsmodus im Bereich der Trennebene zu beiden seitlichen Richtungen der Transportstrecke auseinander gezogen werden und voneinander beabstandet sind, wobei der dadurch entstehende Platz das Einsetzen der zweiten Horizontalfördereinrichtung (24) ermöglicht, so dass die zweite Horizontalfördereinrichtung (24) im zweiten Betriebsmodus die Position des Transportwegs einnimmt und somit denjenigen Teil der Transportstrecke (10) ausbildet, der im ersten Betriebsmodus von der getrennten und seitlich verschobenen ersten Horizontalfördereinrichtung (14) gebildet wird, wobei sowohl im ersten als auch im zweiten Betriebsmodus auf jeweils einen der beiden Transportstrecken Artikel oder Behälter transportiert werden, und wobei die Horizontalfördereinrichtungen (14, 24) bzw. die Transportmittel (15, 25) jeweils mit eigenen Antrieben, insbesondere mit angeflanschten Elektromotoren versehen sind.

2. Maschine nach Anspruch 1, bei der die zweite Horizontalfördereinrichtung (24) in Transportrichtung (18) geteilt ist und durch zwei oder mehr im zweiten Betriebsmodus aneinander gefügte Teile gebildet ist.

3. Maschine nach Anspruch 2, bei der die mehrteilige zweite Horizontalfördereinrichtung (24) im ersten Betriebsmodus in einer Ruheposition oberhalb einer Förderebene abgelegt ist, wobei wenigstens zwei Teile vertikal übereinander gestapelt und/oder miteinander verbunden sind.

4. Maschine nach Anspruch 3, bei der die wenigstens zwei Teile der mehrteiligen zweiten Horizontalfördereinrichtung (24) mit einer Hebevorrichtung zum vertikalen Heben und Senken in die bzw. aus der Ruhelage gekoppelt sind.

5. Maschine nach Anspruch 3 oder 4, bei der wenigstens ein Teil der mehrteiligen zweiten Horizontalfördereinrichtung (24) zur Herstellung der zweiten Betriebslage in Transportrichtung (18) verschiebbar ist.

6. Maschine nach einem der Ansprüche 1 bis 5, wobei die Horizontalfördereinrichtung (14, 24) als Bandförderer ausgebildet ist.

7. Maschine nach einem der Ansprüche 1 bis 6, wobei weitere Antriebs- und/oder Manipulationseinrichtungen zur Verpackung aus dem Eingriffsbereich der Transportstrecke (10) gebracht werden können, wobei die weitere Antriebs- und/oder Manipulationseinrichtungen durch eine oberhalb der Förderebene befindliche Gebindeformeinheit ausgebildet sind, die durch mehrere umlaufende Riemen gebildet sein kann, an denen jeweils Stege, Querstäbe o. dgl. verankert sein können, die zur Gebindeformung während der Förderung der Artikel dienen.

8. Verfahren zum Modifizieren einer Transportstrecke (10) einer Maschine (8) zur Verarbeitung und/oder Verpackung von Gegenständen, bei der Artikel, Gebinde und/oder Verpackungseinheiten im Wesentlichen horizontal auf der Transportstrecke (10) mittels einer ersten Horizontalfördereinrichtung (14) mit wenigstens einem Transportmittel (15) in einem ersten Betriebsmodus befördert werden, wobei mindestens ein weiterer Betriebsmodus durch Auswechseln der ersten Horizontalfördereinrichtung (14) gegen eine weitere Horizontalfördereinrichtung (24) mit wenigstens einem zum ersten Transportmittel (15) unterschiedlichen zweiten Transportmittel (25) hergestellt wird, wobei die Transportstrecke (10) im ersten Betriebsmodus zumindest teilweise durch die erste Horizontalfördereinrichtung (14) mit wenigstens einem endlos umlaufenden Transportband (16) gebildet wird, das für die Umschaltung in einen zweiten Betriebsmodus in horizontaler und/oder vertikaler Richtung aus dem Bereich des Transportwegs für die Artikel, Gebinde und/oder Verpackungseinheiten gebracht und durch eine mehrteilige zweite Horizontalfördereinrichtung (24) mit jeweils wenigstens einer endlos umlaufenden Auflageebene ersetzt wird, wobei die zweite Horizontalfördereinrichtung (24) im zweiten Betriebsmodus die Position des Transportwegs einnimmt und zumindest einen Teil der Transportstrecke (10) bildet, **dadurch gekennzeichnet, dass** die erste Horizontalfördereinrichtung (14) mehrteilig ausgebildet ist und eine Trennebene in Längs- bzw. Transportrichtung (18) aufweist, wobei die wenigstens zwei Teile der ersten Horizontalfördereinrichtung (14) für den ersten Betriebsmodus im Bereich der Trennebene zusammengefügt oder gering voneinander beabstandet sind und als eine einzige Horizontalfördereinrichtung fungieren, und wobei die wenigstens zwei Teile der ersten Horizontalfördereinrichtung (14) für den zweiten Betriebsmodus im Bereich der Trennebene zu beiden seitlichen Richtungen der Transportstrecke (10) auseinander gezogen werden und voneinander beabstandet sind und dass die zweite Horizontalfördereinrichtung (24) in Transportrichtung (18) geteilt ist und durch zwei oder mehr im zweiten Betriebsmodus aneinander gefügte Teile gebildet ist, wobei die mehrteilige zweite Horizontalfördereinrichtung (24) im ersten Betriebsmodus in einer Ruheposition oberhalb einer Förderebene abgelegt ist, wobei wenigstens zwei Teile vertikal übereinander gestapelt und/oder miteinander verbunden sind, und wobei die wenigstens zwei Teile der mehrteiligen zweiten Horizontalfördereinrichtung (24) mit einer Hebevorrichtung zum vertikalen Heben und Senken in die bzw. aus der Ruhelage gekoppelt sind.

9. Verfahren nach Anspruch 8, bei dem wenigstens ein Teil der mehrteiligen zweiten Horizontalfördereinrichtung (24) zur Herstellung der zweiten Betriebslage in Transportrichtung (18) verschoben wird.

10. Verfahren nach einem der Ansprüche 8 bis 9, wobei PET-Behälter als Getränkebehälter verwendet werden.

## Claims

1. A machine (8) for processing and/or packaging objects, the machine having an essentially horizontal transport path (10) for conveying articles, bundles and/or packaging units, which machine (8) comprises a first horizontal conveying device (14) with at least one transport means (15) for a first operating mode, which first horizontal conveying device (14) is replaceable by a further horizontal conveying device (24) with at least one second transport means (25), which is different from the first transport means (15), for the purpose of establishing at least one further operating mode, wherein the first transport means (15) is removable in a horizontal and/or vertical direction from the range of the transport path (10) for the articles, bundles and/or packaging units and is replaceable by a multi-part second horizontal conveying device (24) with in each case at least one endlessly circulating support surface, which second horizontal conveying device (24) is deposited in a rest position above a conveying level in a first operating mode and assumes the position of the transport route and forms a part of the transport path (10) in a second operating mode, wherein the first horizontal conveying device (14) is designed in multiple parts and has a parting line in longitudinal direction or in the direction of transport (18), as the case may be, wherein the at least two parts of the first horizontal conveying device (14) are joined in the area of the parting line or placed only slightly spaced apart from each other and function as a single horizontal conveying device for the first operating mode, and wherein the at least two parts of the first horizontal conveying device (14) are pulled apart in the area of the parting line to both lateral directions of the transport path and are spaced apart from each other for the second operating mode, wherein the space thus resulting enables to install the second horizontal conveying device (24) such that the second horizontal conveying device (24) in the second operating mode assumes the position of the transport route and thus forms that part of the transport path (10) that, in the first operating mode, is formed by the first horizontal conveying device (14), which has been detached and shifted laterally, wherein both in the first and in the second operating mode articles or containers are being transported in each case on one of the two transport paths, and wherein the horizontal conveying devices (14, 24) or, as the case may be, the transport means (15, 25) are each provided with their own drives, in particular, with flange-mounted electric motors.

2. The machine as recited in claim 1, in which the second horizontal conveying device (24) is separated in the direction of transport (18) and formed by two or more parts, which are joined to each other in the second operating mode.

3. The machine as recited in claim 2, in which the multi-part second horizontal conveying device (24) is deposited in a rest position above a conveying level in the first operating mode, wherein at least two parts are vertically stacked on top of one another and/or connected to each other.

4. The machine as recited in claim 3, in which the at least two parts of the multi-part second horizontal conveying device (24) are coupled with a hoisting apparatus for vertically lifting and lowering the parts of the multi-part second horizontal conveying device (24) into or out of the rest position, as the case may be.

5. The machine as recited in claim 3 or 4, in which at least one part of the multi-part second horizontal conveying device (24) is shiftable in the direction of transport (18) for the purpose of establishing the second operating position.

6. The machine as recited in one of the claims 1 to 5 wherein the horizontal conveying device (14, 24) is designed as a belt conveyor.

7. The machine as recited in one of the claims 1 to 6 wherein further drive devices and/or manipulation devices for packaging can be removed from the engagement range of the transport path (10), wherein the further drive devices and/or manipulation devices are formed by a bundle forming unit located above the conveying level, which bundle forming unit can be formed by a plurality of circulating belts, at each of which crosspieces or crossbars or the like can be attached, which serve for forming bundles while the articles are being conveyed.

8. A method for modifying a transport path (10) of a machine (8) for processing and/or packaging objects, in which machine articles, bundles and/or packaging units are conveyed essentially horizontally on the transport path (10) by means of a first horizontal conveying device (14) with at least one transport means (15) in a first operating mode, wherein at least one further operating mode is established by replacing the first horizontal conveying device (14) by a further horizontal conveying device (24) with at least one second transport means (25), which is different from the first transport means (15), wherein the transport path (10) in the first operating mode is at least partially formed by the first horizontal conveying device (14) with at least one endlessly circulating transport belt (16), which, for switching to a second operating mode, is removed in a horizontal and/or vertical direction from the range of the transport route for the articles, bundles, and/or packaging units and is replaced by a multi-part second horizontal conveying device (24) with in each case at least one endlessly circulating support surface, wherein the second horizontal conveying device (24) in the second operating mode assumes the position of the transport route and forms at least a part of the transport path (10), **characterised in that** the first horizontal conveying device (14) is designed in multiple parts and has a parting line in longitudinal direction or in the direction of transport (18), as the case may be, wherein the at least two parts of the first horizontal conveying device (14) are joined in the area of the parting line or placed only slightly spaced apart from each other and function as a single horizontal conveying device for the first operating mode, and wherein the at least two parts of the first horizontal conveying device (14) are pulled apart in the area of the parting line to both lateral directions of the transport path and are spaced apart from each other for the second operating mode, and **in that** the second horizontal conveying device (24) is separated in the direction of transport (18) and formed by two or more parts, which are joined to each other in the second operating mode, wherein the multi-part second horizontal conveying device (24) is deposited in a rest position above a conveying level in a first operating mode, wherein at least two parts are vertically stacked on top of one another and/or connected to each other, and wherein the at least two parts of the multi-part second horizontal conveying device (24) are coupled with a hoisting apparatus for vertically lifting and lowering the parts of the multi-part second horizontal conveying device (24) into or out of the rest position, as the case may be.

9. The method as recited in claim 8, in which at least one part of the multi-part second horizontal conveying device (24) is shifted in the direction of transport (18) for the purpose of establishing the second operating position.

10. The method as recited in one of the claims 8 to 9 wherein PET containers are used as beverage containers.

## Revendications

1. Machine (8) de traitement et/ou d'emballage d'objets, comprenant un trajet de transport (10) pour l'essentiel horizontal destiné au transport d'articles, de multipacks et/ou d'unités d'emballage, qui comprend un premier dispositif de transport horizontal (14) ayant au moins un moyen de transport (15) pour un premier mode de fonctionnement, qui, pour établir au moins un autre mode de fonctionnement, peut être remplacé par un autre dispositif de transport horizontal (24) ayant au moins un deuxième moyen de transport (25) différent du premier moyen de transport (15), ledit premier moyen de transport (15) pouvant être amené, dans la direction horizontale et/ou verticale, hors de la zone du trajet de transport (10) pour les articles, multipacks et/ou unités d'emballage et être remplacé par un deuxième dispositif de transport horizontal (24) en plusieurs parties ayant respectivement au moins un plan d'appui circulant sans fin, ledit deuxième dispositif de transport horizontal (24) étant déposé, dans un premier mode de fonctionnement, dans une position de repos au-dessus d'un plan de transport et occupant, dans un deuxième mode de fonctionnement, la position de la voie de transport et formant une partie du trajet de transport (10), le premier dispositif de transport horizontal (14) étant réalisé en plusieurs parties et présentant un plan de séparation dans le sens longitudinal ou bien de transport (18), lesdites au moins deux parties du premier dispositif de transport horizontal (14) étant, pour le premier mode de fonctionnement, assemblées au niveau du plan de séparation ou étant à faible distance l'une de l'autre et faisant fonction d'unique dispositif de transport horizontal, et lesdites au moins deux parties du premier dispositif de transport horizontal (14) étant, pour le deuxième mode de fonctionnement, séparées au niveau du plan de séparation en étant tirées vers les deux directions latérales du trajet de transport et espacées l'une de l'autre, la place ainsi créée permettant l'insertion du deuxième dispositif de transport horizontal (24) de sorte que, dans le deuxième mode de fonctionnement, le deuxième dispositif de transport horizontal (24) occupe la position de la voie de transport et forme ainsi la partie du trajet de transport (10) qui est formée, dans le premier mode de fonctionnement, par le premier dispositif de transport horizontal (14) séparé et déplacé latéralement, des articles ou récipients étant transportés aussi bien dans le premier que dans le deuxième mode de fonctionnement sur respectivement l'un des deux trajets de transport, et les dispositifs de transport horizontal (14, 24) ou bien les moyens de transport (15, 25) étant munis chacun de propres mécanismes d'entraînement, en particulier de moteurs électriques bridés.

2. Machine selon la revendication 1, dans laquelle le deuxième dispositif de transport horizontal (24) est divisé dans le sens de transport (18) et formé par deux parties ou plus assemblées dans le deuxième mode de fonctionnement.

3. Machine selon la revendication 2, dans laquelle le deuxième dispositif de transport horizontal (24) en plusieurs parties est déposé, dans le premier mode de fonctionnement, dans une position de repos au-dessus d'un plan de transport, au moins deux parties étant empilées verticalement et/ou reliées entre elles.

4. Machine selon la revendication 3, dans laquelle lesdites au moins deux parties du deuxième dispositif de transport horizontal (24) en plusieurs parties sont couplées à un dispositif de levage pour les montée et descente verticales dans ou bien depuis la position de repos.

5. Machine selon la revendication 3 ou 4, dans laquelle au moins une partie du deuxième dispositif de transport horizontal (24) en plusieurs parties est déplaçable dans le sens de transport (18) pour réaliser la deuxième position de fonctionnement.

6. Machine selon l'une quelconque des revendications 1 à 5, dans laquelle le dispositif de transport horizontal (14, 24) est réalisé comme bande transporteuse.

7. Machine selon l'une quelconque des revendications 1 à 6, dans laquelle d'autres dispositifs d'entraînement et/ou de manipulation pour l'emballage peuvent être amenés hors de la zone d'action du trajet de transport (10), lesdits autres dispositifs d'entraînement et/ou de manipulation étant réalisés par une unité de formage de multipacks qui est située au-dessus du plan de transport et peut être formée par plusieurs courroies circulantes sur lesquelles des entretoises, barres transversales ou similaires peuvent être ancrées respectivement qui servent au formage de multipack durant le transport des articles.

8. Procédé de modification d'un trajet de transport (10) d'une machine (8) de traitement et/ou d'emballage d'objets, dans laquelle des articles, multipacks et/ou unités d'emballage sont transportés pour l'essentiel horizontalement sur le trajet de transport (10) au moyen d'un premier dispositif de transport horizontal (14) ayant au moins un moyen de transport (15), dans un premier mode de fonctionnement, au moins un autre mode de fonctionnement étant établi en échangeant ledit premier dispositif de transport horizontal (14) contre un autre dispositif de transport horizontal (24) ayant au moins un deuxième moyen de transport (25) différent du premier moyen de transport (15), le trajet de transport (10) étant constitué, dans le premier mode de fonctionnement, au moins partiellement par le premier dispositif de transport horizontal (14) avec au moins une bande transporteuse (16) circulant sans fin qui, pour passer à un deuxième mode de fonctionnement, est amenée, dans la direction horizontale et/ou verticale, hors de la zone de la voie de transport pour les articles, multipacks et/ou unités d'emballage et remplacée par un deuxième dispositif de transport horizontal (24) en plusieurs parties ayant respectivement au moins un plan d'appui circulant sans fin, le deuxième dispositif de transport horizontal (24) occupant, dans le deuxième mode de fonctionnement, la position de la voie de transport et formant au moins une partie du trajet de transport (10), **caractérisé par le fait que** le premier dispositif de transport horizontal (14) est réalisé en plusieurs parties et présente un plan de séparation dans le sens longitudinal ou bien de transport (18), lesdites au moins deux parties du premier dispositif de transport horizontal (14) étant, pour le premier mode de fonctionnement, assemblées au niveau du plan de séparation ou étant à faible distance l'une de l'autre et faisant fonction d'unique dispositif de transport horizontal, et lesdites au moins deux parties du premier dispositif de transport horizontal (14) étant, pour le deuxième mode de fonctionnement, séparées au niveau du plan de séparation en étant tirées vers les deux directions latérales du trajet de transport (10) et espacées l'une de l'autre, et que le deuxième dispositif de transport horizontal (24) est divisé dans le sens de transport (18) et formé par deux parties ou plus assemblées dans le deuxième mode de fonctionnement, ledit deuxième dispositif de transport horizontal (24) en plusieurs parties étant déposé, dans le premier mode de fonctionnement, dans une position de repos au-dessus d'un plan de transport, au moins deux parties étant empilées verticalement et/ou reliées entre elles, et lesdites au moins deux parties du deuxième dispositif de transport horizontal (24) en plusieurs parties étant couplées à un dispositif de levage pour les montée et descente verticales dans ou bien depuis la position de repos.

9. Procédé selon la revendication 8, dans lequel au moins une partie du deuxième dispositif de transport horizontal (24) en plusieurs parties est déplacée dans le sens de transport (18) pour réaliser la deuxième position de fonctionnement.

10. Procédé selon l'une quelconque des revendications 8 à 9, dans lequel des récipients en PET sont utilisés comme récipients de boisson.
